# EUROPÄISCHE PATENTANMELDUNG

(11) **EP 3 643 364 A1**
(43) Veröffentlichungstag der Anmeldung: **29.04.2020**
(21) Anmeldenummer: 18202268.1
(22) Anmeldetag: 24.10.2018
(51) Int. Cl.: A62C 2/06, F16L 5/04, E04B 1/94, E06B 5/16

(54) **BRANDSCHUTZELEMENT ZUM ABDICHTEN VON DURCHGANGSÖFFNUNGEN IN BAUELEMENTEN**

(71) Anmelder: Hilti Aktiengesellschaft, 9494 Schaan (LI)
(72) Erfinder: Ahlers, Andreas, 87679 Westendorf (DE); Simon, Sebastian, 86807 Buchloe Lindenberg (DE)
(74) Vertreter: Hilti Aktiengesellschaft Corporate Intellectual Property

(57) **Zusammenfassung**

Die vorliegende Erfindung betrifft ein Brandschutzelement mit einem Schichtkörper zur Abdichtung von Durchgangsöffnungen in Bauelementen, wie beispielsweise Gebäudebauteilen, durch die Leitungen hindurchgeführt sind. Ferner betrifft die vorliegende Erfindung ein Verfahren zur Herstellung des erfindungsgemäßen Brandschutzelements sowie die Verwendung des Brandschutzelementes zur Abdichtung von Durchgangsöffnungen und/oder Fugen in Bauelementen gegen Feuer und Rauchgase.

## Beschreibung

Die vorliegende Erfindung betrifft ein Brandschutzelement mit einem Schichtkörper zur Abdichtung von Durchgangsöffnungen in Bauelementen, wie beispielsweise Gebäudebauteilen, durch die Leitungen hindurchgeführt sind. Ferner betrifft die vorliegende Erfindung ein Verfahren zur Herstellung des erfindungsgemäßen Brandschutzelements sowie die Verwendung des Brandschutzelementes zur Abdichtung von Durchgangsöffnungen und/oder Fugen in Bauelementen gegen Feuer und Rauchgase.

Beim Verlegen von Leitungen, wie z.B. Rohrleitungen, elektrische Leitungen und dergleichen, werden diese durch Durchgangsöffnungen in Bauelementen, insbesondere Gebäudebauteilen, wie Wände und Decken, geführt. Um den Durchtritt von Feuer und Rauchgasen im Brandfall zu verhindern, werden zwischen den Innenwänden der Durchgangsöffnungen und den hindurchgeführten Leitungen sowie in Fugen Brandschutzelemente eingebracht. Diese Brandschutzelemente werden in der Regel mit intumeszierenden Materialien versehen oder aus diesen gebildet, so dass sich das Material bei Einwirkung von Wärme, wie sie im Brandfall auftritt, ausdehnt und dadurch die Leitung abdrückt und die Durchgangsöffnung in dem Bauelement verschließt.

In der Regel weisen bekannte Brandschutzelemente ein Trägermaterial auf, dem für die Zwecke des Brandschutzes Additive zugesetzt werden, die bei erhöhter Temperatur, wie etwa im Brandfall, expandieren bzw. intumeszieren und in Zusammenspiel mit dem Trägermaterial und ggf. weiteren Additiven eine isolierende Schicht bilden und somit die ggf. entstehende Öffnung verschließen. Aus produktionstechnischen Gründen wird bei der Herstellung der bekannten Brandschutzelemente das Trägermaterial inklusive der intumeszierenden Additive auf eine Folie oder ein Gewebe, wie z.B. ein Glasfasergitter, aufgebracht. Die so hergestellten Brandschutzelemente weisen somit einen zweischichtigen Aufbau auf.

Ferner sind auch Brandschutzelemente bekannt, die einen mehrschichtigen Aufbau aufweisen. So beschreibt die WO2009/099755 A1 ein intumeszierendes Brandschutzelement in Form einer Klebefolie oder Klebebandrolle zum Schutz von Stahlkonstruktionen. Das Brandschutzelement umfasst laminierte Schichten aus einem intumeszierenden Material, einer verstärkenden Matrix, einem druckempfindlichen Klebstoff sowie eine Trennschicht. Zur Gewährleistung eines ausreichenden Brandschutzes ist die verstärkende Matrix so gewählt, dass diese bei erhöhten Temperaturen an struktureller Festigkeit verliert und somit eine physikalische Separation innerhalb der verstärkenden Matrix ermöglicht wird.

In den bekannten Brandschutzelementen wird meist ein physikalisch wirkendes Treibmittel eingesetzt. Häufig weisen die physikalisch wirkenden Treibmittel eine strukturelle Anisotropie auf, was bedeutet, dass sie beispielsweise schichtartig aufgebaut in Form von Plättchen vorliegen können. Es ist aber auch möglich, dass das physikalisch wirkende Treibmittel im Wesentlich keine strukturelle Anisotropie zeigt. Dies ist beispielsweise der Fall, wenn das physikalisch wirkende Treibmittel in Form von Kügelchen vorliegt. Das physikalisch wirkende Treibmittel ist zufällig innerhalb des Trägermaterials verteilt und ausgerichtet, so dass im Brandfall eine Expansion in alle drei Raumrichtungen erfolgt. Betrachtet man die Expansion des physikalisch wirkenden Treibmittels in eine Raumrichtung, so expandiert dieses jeweils "nach oben" und "nach unten". Bereits in der vereinfachten Betrachtung der Expansion in eine Raumrichtung zeigt sich, dass es aufgrund entgegengesetzt wirkender Kräfte ("nach oben" und "nach unten") zu einer gegenseitigen Behinderung des physikalisch wirkenden Treibmittels bei der Expansion kommt. Dieser Effekt kommt umso stärker zum Tragen je größer die strukturelle Anisotropie des physikalisch wirkenden Treibmittels ausgeprägt ist. Es kommt zu einem Phänomen, der "*negativen Intumeszenz*", welches den Verlust an theoretisch vorhandenem Expansions- bzw. Intumeszenzpotential beschreibt, hervorgerufen durch die gegenseitige Behinderung des physikalisch wirkenden Treibmittels bei der Expansion.

Ferner kommt es im zeitlichen Verlauf der Expansion zu einer Verdichtung des bereits expandierten Materials, da das bereits expandierte Material durch noch nicht expandiertes Material zusammendrückt wird. Somit wird insgesamt die Expansion des physikalisch wirkenden Treibmittels zur Durchgangsmitte zum Verschluss des Durchgangs behindert. Die auftretende Verdichtung führt dazu, dass das vorhandene Expansions- bzw. Intumeszenzpotential des physikalisch wirkenden Treibmittels lediglich unvollständig genutzt werden kann. Ferner sorgt die Verdichtung zu einer Zunahme der Wärmeleitfähigkeit, wodurch ein schnellerer Temperaturanstieg an der brandabgewandten Seite auftritt, mit dem ein erhöhtes Risiko für einen Feuerübertritt einhergeht.

Diese nachteiligen Effekte kommen insbesondere bei Brandschutzelementen für größere Öffnungsquerschnitte und bei spät schmelzenden oder dickwandigen Leitungen zum Tragen, bei denen große Mengen an physikalisch wirkenden Treibmitteln verwendet werden, um einen zuverlässigen Verschluss der Durchgangsöffnung im Brandfall zu gewährleisten. Die zuvor beschriebenen Probleme sind daher hier im verstärktem Maße zu beobachten. Zusätzlich weisen diese Brandschutzelemente teilweise ein hohes Gewicht auf, wodurch deren Installation erschwert wird. Zusätzlich ist die Verwendung von großen Mengen an physikalisch wirkenden Treibmitteln sowohl unter ökologischen als auch wirtschaftlichen Gesichtspunkten von Nachteil.

Es besteht daher ein Bedarf nach Brandschutzelementen, mit denen ein Zwischenraum zwischen einer Innenfläche einer Durchgangsöffnung und einer hindurchgeführten Leitung im Brandfall zuverlässig abgedichtet werden kann und wodurch erreicht wird, dass eine Verdichtung des physikalisch wirkenden Treibmittels bei der Expansion in vermindertem Maße auftritt bzw. weitestgehend verhindert wird und folglich die hindurchgeführte Leitung in verstärktem Maß abgedrückt wird.

Ferner ist es Aufgabe der vorliegenden Erfindung ein Brandschutzelement zur Verfügung zu stellen, welches eine Verringerung des Materialeinsatzes, insbesondere der Menge an physikalisch wirkenden Treibmittel, ermöglicht, ohne die Performance des Brandschutzelementes, insbesondere in Hinblick auf dessen Verschlussfähigkeit, den von dem Brandschutzelement ausgehenden Blähdruck sowie die resultierende Aschen- bzw. Aschenkrustenstabilität, im Brandfall zu beeinträchtigen. Es ist insbesondere Aufgabe der vorliegenden Erfindung ein Brandschutzelement zur Verfügung zu stellen, mit der eine Verringerung der Menge des physikalisch wirkenden Treibmittels im Brandschutzelement ermöglicht wird und mit der gleichzeitig eine verbesserte Performance des Brandschutzelementes, insbesondere in Hinblick auf dessen Verschlussfähigkeit, den von dem Brandschutzelement ausgehenden Blähdruck sowie die resultierende Aschen- bzw. Aschenkrustenstabilität, im Brandfall erreicht werden kann.

Die Aufgabe wird durch ein Brandschutzelement nach Anspruch 1 und durch ein Verfahren gemäß dem nebengeordneten Anspruch 14 gelöst.

Weitere Ausgestaltungen sind in den abhängigen Ansprüchen angegeben.

Gemäß einem ersten Aspekt der vorliegenden Erfindung ist ein Brandschutzelement vorgesehen umfassend einen Schichtkörper (11) enthaltend mindestens zwei Brandschutzschichten (2) und mindestens eine zwischen den Brandschutzschichten (2) angeordnete Funktionsschicht (3), wobei
i) die Brandschutzschichten (2) jeweils ein Trägermaterial (4) und mindestens ein physikalisch wirkendes Treibmittel (5) umfassen und
ii) die Funktionsschicht (3) eine Temperaturbeständigkeit bis mindestens 300 °C aufweist,
dadurch gekennzeichnet, dass zur Bildung des Schichtkörpers (11) die Brandschutzschichten (2) und die zwischen den Brandschutzschichten angeordnete Funktionsschicht (3) im Wesentlichen stoffschlüssig miteinander verbunden sind und die Funktionsschicht (3) mindestens ein semi-rigides Material umfasst.

Eine Idee des obigen Brandschutzelementes besteht in der Bereitstellung eines Schichtkörpers, bei dem zwischen zwei oder mehr Brandschutzschichten jeweils mindestens eine Funktionsschicht angeordnet ist, die in der Lage ist, einer Verdichtung des physikalisch wirkenden Treibmittels im Verlauf der Expansion entgegenzuwirken, indem der von den Brandschutzschichten ausgehende Blähdruck auf die zwischengelagerte Funktionsschicht verteilt wird. Neben einer ausreichenden mechanischen Festigkeit zur Kompensation des Blähdruckes, muss die Funktionsschicht eine ausreichende Flexibilität aufweisen, so dass die Expansion des physikalisch wirkenden Treibmittels nicht behindert wird. Diese Merkmale werden durch ein semi-rigides Material verwirklicht.

Zum besseren Verständnis der Erfindung werden die folgenden Erläuterungen der hierin verwendeten Terminologie als sinnvoll erachtet. Im Sinne der Erfindung:
- beschreibt der Begriff "*Trägermaterial*" eine Zusammensetzung umfassend ein oder mehrere Polymere. Das Trägermaterial zeichnet sich dadurch aus, dass das oder die Polymere eine kontinuierliche Phase bilden;
- beschreibt der Begriff "*stoffschlüssig*", einen durch molekulare Kräfte entstehenden Schluss zwischen zwei Schichten, der diese so zusammenhält, dass sie in ihrer Gesamtheit einen festen Körper ergeben. Eine stoffschlüssige Verbindung kann beispielsweise durch Schweißen, Löten oder Kleben hergestellt werden. Das Lösen einer stoffschlüssigen Verbindung ist vielfach nur unter Zerstörung der Elemente möglich, die über eine stoffschlüssige Verbindung miteinander verbunden waren.
- bedeutet "*physikalische Intumeszenz*" die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt. Im Rahmen der vorliegenden Erfindung ist unter dem Begriff eines physikalisch wirkenden Treibmittels ein Material oder eine Komponente zu verstehen, die in der Lage ist, physikalische Intumeszenz beim Überschreiten einer bestimmten Temperatur, der sogenannten Aktivierungstemperatur, zu zeigen;
- bedeutet der Begriff "*thermische Expansion*" oder vereinfacht "*Expansion*" die durch physikalische und/oder chemische Intumeszenz hervorgerufene Volumenzunahme eines Materials oder einer Komponente;
- ist ein "*Polymer*" ein Molekül mit sechs oder mehr Wiederholungseinheiten, das eine Struktur aufweisen kann, die linear, verzweigt, sternförmig, gewunden, hyperverzweigt oder vernetzt sein kann; Polymere können eine einzelne Art von Wiederholungseinheiten aufweisen ("Homopolymere") oder sie können mehr als eine Art von Wiederholungseinheiten aufweisen ("Copolymere");
- bedeutet der Begriff "*Festkörpergehalt*" den Gehalt an nicht-flüchtigen Anteilen an einer Zusammensetzung. Die Bestimmung des Festkörpergehaltes wird nach DIN EN ISO 3251 (2008) durchgeführt;
- bedeutet "*enthalten*" und "*umfassen*", dass neben den genannten Bestandteilen noch weitere vorhanden sein können. Diese Begriffe sind einschließlich gemeint und umfassen daher auch den Begriff "*bestehen aus*". "*Bestehen aus*" ist abschließend gemeint und bedeutet, dass keine weiteren Bestandteile vorhanden sein können. In einer bevorzugten Ausführungsform bedeuten die Begriffe "*enthalten*" und "*umfassen*" den Begriff "*bestehen aus*";
- beschreibt ein durch Zahlen begrenzter Bereich, z.B. "5 bis 60 Gew.-%", dass die beiden Eckwerte und jeder Wert innerhalb dieses Bereichs einzeln offenbart sind;

Das Brandschutzelement im Sinne der vorliegenden Erfindung umfasst einen Schichtkörper aus mindestens zwei Brandschutzschichten und mindestens eine zwischen den Brandschutzschichten angeordnete Funktionsschicht, wobei die Brandschutzschichten und die zwischen den Brandschichten angeordnete Funktionsschicht im Wesentlichen stoffschlüssig miteinander verbunden sind. Somit umfasst der Schichtkörper im Sinne der vorliegenden Erfindung in der einfachsten Ausgestaltung einen dreischichtigen Aufbau. Es ist jedoch auch möglich, dass der Schichtkörper weitere Brandschutzschichten und/oder Funktionsschichten aufweist. In diesem Fall ist es vorteilhaft, dass der Schichtkörper einen alternierenden Aufbau aus Brandschutzschichten und Funktionsschichten aufweist, d.h. dass der Schichtkörper aus einer Abfolge von gleichen oder unterschiedlichen Brandschutzschichten und gleichen oder unterschiedlichen Funktionsschichten aufgebaut ist, wobei vorteilhaft jeweils die zueinander benachbarten Brandschutzschichten und Funktionsschichten im Wesentlichen stoffschlüssig miteinander verbunden sind.

Der Begriff "*im Wesentlichen stoffschlüssig*" im Sinne der vorliegenden Erfindung ist so zu verstehen, dass die Materialien zweier benachbarter Schichten (Brandschutzschicht und Funktionsschicht) zu einem großen Teil stoffschlüssig miteinander verbunden sind. In manchen Fällen kann die Funktionsschicht bedingt durch ihre Geometrie "Löcher" aufweisen. Der Begriff der "*im Wesentlichen stoffschlüssigen Verbindung*" ist in diesen Fällen auf das tatsächliche Material, aus der die Funktionsschicht gebildet ist, zu beziehen und die "*Löcher*" bleiben unberücksichtigt. Zusätzlich kann die Oberflächenbeschaffenheit der Funktionsschicht bestimmen, ob ein flächiger Stoffschluss, ein räumlicher Stoffschluss oder Mischungen davon zwischen der Brandschutzschicht und Funktionsschicht zustande kommt. Bei einem räumlichen Stoffschluss ist im Wesentlichen die gesamte Materialoberfläche der Funktionsschicht mit der Brandschutzschicht verbunden. In den Fällen, in denen die Funktionsschicht eine ausgeprägte dreidimensionale Struktur aufweist, kann es vorkommen, dass nicht die gesamte Materialoberfläche der Funktionsschicht mit der Brandschutzschicht stoffschlüssig verbunden ist, sondern lediglich das am höchst bzw. tiefst liegenden Material der Funktionsschicht. In diesem Fall spricht man von einem flächigen Stoffschluss. Um den Effekt der Erfindung erzielen zu können, ist ein im Wesentlichen flächiger Stoffschluss ausreichend, es ist jedoch bevorzugt, dass ein im Wesentlicher räumlicher Stoffschluss zwischen Brandschutzschicht und Funktionsschicht vorliegt.

Es kann beispielsweise aus produktionstechnischen Gründen vorkommen, dass bei kleineren Arealen zweier benachbarter Schichten keine flächige bzw. räumliche stoffschlüssige Verbindung zustande kommt und an diesen Stellen die Flächen der Schichten lediglich aufeinanderliegen. Entsprechende Schichtkörper gelten auch als erfindungsgemäß und sind geeignet im erfindungsgemäßen Brandschutzelement eingesetzt zu werden. Vorzugsweise sind innerhalb des Schichtkörpers mindestens 40 %, bevorzugter 60 %, noch bevorzugter 80 % der zueinander benachbarten Flächen der Brandschutzschicht und der Funktionsschicht flächig stoffschlüssig, insbesondere räumlich stoffschlüssig, miteinander verbunden. Es hat sich als besonders vorteilhaft herausgestellt, wenn innerhalb des Schichtkörpers mindestens 90 %, bevorzugter mindestens 95 % und besonders bevorzugt 98 % aller zueinander benachbarten Brandschutzschichten und Funktionsschichten flächig stoffschlüssig, insbesondere räumlich stoffschlüssig, miteinander verbunden sind.

Der Schichtkörper im Sinne der vorliegenden Erfindung umfasst mindestens zwei Brandschutzschichten und mindestens eine zwischen den Brandschutzschichten angeordnete Funktionsschicht.

Die Brandschutzschichten umfassen jeweils mindestens ein Trägermaterial und mindestens ein physikalisch wirkendes Treibmittel.

Das Trägermaterial der im Schichtkörper vorhandenen Brandschutzschichten kann dabei gleich oder verschieden sein. In einer bevorzugten Ausführungsform umfassen die Brandschutzschichten das gleiche Trägermaterial.

Das Trägermaterial umfasst vorzugsweise eine Polymerdispersion auf Wasser- oder Lösungsmittelbasis, insbesondere eine wässrige Polymerdispersion. Beispiele wässriger Polymerdispersionen, die sich in besonderem Masse bewährt haben, sind wässrige Acrylatdispersionen, wässrige Dispersionen bzw. Emulsionen von Harnstoff-, Formaldehyd- oder Melaminharzen, Polyvinylacetaten, Polyvinylalkoholen, Acrylnitril, Styrolacrylaten und ihrer Copolymere.

Bevorzugt enthält das Trägermaterial eine wässrige Acrylat-(Copolymer)-Dispersion, besonders bevorzugt eine wässrige Dispersion eines Polyalkyl-(meth)acrylats und/oder eines Alkyl(meth)acrylat-Copolymers. Vorzugsweise handelt es sich dabei um wässrige Dispersionen, die man durch Polymerisation, namentlich durch Emulsionspolymerisation von Alkyl(meth)acrylaten und/oder durch Copolymerisation von Alkyl(meth)acrylaten mit sich und/oder mit copolymerisierbaren Comonomeren, wie vorzugsweise (Meth)acrylsäure, (Meth)acrylamid, Styrol, Itaconsäure, Acrylnitril und/ oder Citraconsäure erhält, wobei die Alkylgruppen der Alkyl(meth)acrylate bevorzugt 1 bis 6 C-Atome, bevorzugter 1 bis 4 C-Atome aufweisen. Erfindungsgemäß besonders bevorzugt sind wässrige Dispersionen von Polybutylacrylat, Polyethylhexylacrylat oder Alkyl(meth)acrylat-Styrol-Copolymeren. Die Acrylat-(Copolymer)-Dispersion kann sowohl Homopolymere als auch Copolymere oder auch Mischungen von Homopolymeren und/oder Copolymeren enthalten und wird so vorzugsweise mit einem pH-Wert im Bereich von 7 bis 9, vorzugsweise einen pH-Wert von 8, welcher erforderlichenfalls mit verdünnter Natronlauge oder Ammoniaklösung eingestellt wird, mit den anderen Bestandteilen vermischt. Diese wässrige Acrylat- (Copolymer)-Dispersion besitzt vorzugsweise einen Festkörpergehalt von 40 bis 90 Gew.-%, stärker bevorzugt von 50 bis 80 Gew.-%. Die erfindungsgemäß bevorzugt eingesetzten Acrylat-(Copolymer)- Dispersionen sind dem Fachmann bekannt und im Handel erhältlich. Die Härtung erfolgt physikalisch durch Trocknen.

Es ist weiterhin bevorzugt, dass das Trägermaterial einen Erweichungs- oder Zersetzungspunkt im Temperaturbereich von 80 °C bis 500 °C, bevorzugt von 90 °C bis 400 °C, weiter bevorzugt von 110 °C bis 300 °C hat. Durch eine geeignete Wahl der Erweichungs- oder Zersetzungstemperatur des Trägermaterials der Brandschutzschichten ist es möglich die Interaktion zwischen der Funktionsschicht und des physikalisch wirkenden Treibmittels zu beeinflussen.

Erfindungsgemäß umfassen die Brandschutzschichten mindestens ein physikalisch wirkendes Treibmittel. Das physikalisch wirkende Treibmittel der im Schichtkörper vorhandenen Brandschutzschichten kann dabei gleich oder verschieden sein. In einer bevorzugten Ausführungsform umfassen die Brandschutzschichten des Schichtkörpers das gleiche physikalisch wirkende Treibmittel.

In einer besonders bevorzugten Ausführungsform der Erfindung umfassen die Brandschutzschichten sowohl das gleiche Trägermaterial wie auch das gleiche physikalisch wirkende Treibmittel.

Das physikalisch wirkende Treibmittel ist bevorzugt aus der Gruppe bestehend aus Graphit-Interkallationsverbindungen (auch bekannt als Blähgraphit), Schichtsilikat-Interkallationsverbindungen, Perliten und Kombinationen davon ausgewählt.

Vorzugsweise ist das physikalisch wirkende Treibmittel ein schichtartig aufgebautes, physikalisch wirkendes Treibmittel.

Unter dem Begriff "*schichtartig aufgebaut*" wird im Sinne der vorliegenden Erfindung ein Material verstanden, welches strukturell anisotrop in Form von Schichten aufgebaut ist. Der schichtartige Aufbau kommt dadurch zustande, dass die Wechselwirkungen innerhalb einer Schicht wesentlich stärker ausgeprägt sind als zwischen den Schichten. Im Sinne der vorliegenden Erfindung bedeutet dies insbesondere, dass innerhalb der Schichten kovalente Bindungen vorliegen, wobei zwischen den Schichten nur schwache Wechselwirkung in Form elektrostatischer und/oder van-der-Waals-Kräfte wirken.

Vorzugsweise liegt das schichtartig aufgebaute, physikalisch wirkende Treibmittel in Form von Plättchen vor.

Das schichtartig aufgebaute, physikalisch wirkende Treibmittel ist bevorzugt aus der Gruppe bestehend aus Graphit-Interkallationsverbindungen, Schichtsilikat-Interkallationsverbindungen und Kombinationen davon ausgewählt, wobei Graphit-Interkallationsverbindungen oder blähfähiger Vermiculit bevorzugt sind.

Die mittlere Teilchengröße des schichtartig aufgebauten, physikalisch wirkenden Treibmittels kann je nach Anwendungsfall in einem breiten Bereich liegen. Vorzugsweise hat das schichtartig aufgebaute, physikalisch wirkende Treibmittel eine mittlere Teilchengröße von 50 µm bis 4,0 mm, bevorzugt von 80 µm bis 3,5 mm und besonders bevorzugt von 100 µm bis 3,0 mm. Die mittlere Teilchengröße kann nach den dem Fachmann bekannten Methoden, wie beispielsweise mittels Siebanalyse nach DIN 66165 (2016), bestimmt werden.

Als Graphit-Interkallationsverbindungen kommen beispielsweise bekannte Einlagerungsverbindungen von SOₓ, NOₓ, Halogen und/oder starken Säuren in Graphit in Frage. Diese werden auch als Graphitsalze bezeichnet. Bevorzugt sind Graphit-Interkallationsverbindungen, die bei Temperaturen (Aktivierungstemperaturen) von beispielsweise 120 bis 350°C unter Aufblähen SO₂, SO₃, NO und/oder NO₂ abgeben. Für die vorliegende Erfindung geeignete Blähgraphite sind im Handel erhältlich.

Vorzugsweise haben die Graphit-Interkallationsverbindungen eine mittlere Teilchengröße von 50 µm bis 1,0 mm, bevorzugt von 70 µm bis 0,7 mm und besonders bevorzugt von 90 µm bis 0,5 mm.

Als Schichtsilikat-Interkallationsverbindungen (expandierbare Schichtsilikate) kommen beispielsweise solche Verbindungen in Betracht, die durch Einlagerung von Interkallationsverbindungen in native, blähfähige Schichtsilikate, insbesondere nativen Vermiculit, erhältlich sind. Als Interkallationsverbindung sind Vertreter der Alkoholate von Lithium und Kalium und Salze von Lithium, Natrium und Kalium mit organischen Säuren und/oder wässrige Lösungen dieser bevorzugt, die durch Kationenaustausch in das native Schichtsilikat einlagert werden. In dieser Hinsicht wird Bezug genommen auf die DE 1029083 A1 sowie die darin genannte Literatur, z.B. EP 0 429 246 A1 deren Inhalte hiermit in diese Anmeldung aufgenommen werden.

Vorzugsweise haben die Schichtsilikat-Interkallationsverbindungen eine mittlere Teilchengröße von 100 µm bis 4,0 mm, bevorzugt von 120 µm bis 3,5 mm und besonders bevorzugt von 150 µm bis 3,0 mm.

In einer bevorzugten Ausführungsform der Erfindung umfassen alle Brandschutzschichten des Schichtkörpers gleiche oder verschiedene Graphit-Interkallationsverbindungen, insbesondere umfassen alle Brandschutzschichten des Schichtkörpers die gleiche Graphit-Interkallationsverbindung.

Zum Aufbau der Brandschutzschichten kann das physikalisch wirkende Treibmittel innerhalb des Trägermaterials eingebettet sein und/oder auf einer oder mehreren Flächen der Oberfläche des Trägermaterials aufgebracht sein.

In einer bevorzugten Ausführungsform ist das physikalisch wirkende Treibmittel innerhalb des Trägermaterials eingebettet. Vorzugsweise ist das physikalisch wirkende Treibmittel im Wesentlichen gleichmäßig innerhalb des Trägermaterials verteilt. Es ist aber auch möglich, dass die Konzentration des physikalisch wirkenden Treibmittels im Trägermaterial variiert. So kann die Konzentration des physikalisch wirkenden Treibmittels beispielsweise punktuell, musterartig flächig und/oder sandwichartig variant sein.

In einer weiteren bevorzugten Ausführungsform ist das physikalisch wirkende Treibmittel auf einer oder mehreren Flächen der Oberfläche des Trägermaterials angebracht, insbesondere mindestens auf der der Funktionsschicht zugewandten Fläche.

In einer weiteren bevorzugten Ausführungsform ist das physikalisch wirkende Treibmittel sowohl innerhalb des Trägermaterials eingebettet als auch auf einer oder mehreren Flächen der Oberfläche des Trägermaterials angebracht.

Das physikalisch wirkende Treibmittel kann je nach Anwendungsfall in einem sehr breiten gewichtsprozentualen Bereich in der Brandschutzschicht vorhanden sein. Es ist jedoch bevorzugt, dass das physikalisch wirkende Treibmittel in einer Menge von 10 bis 90 Gew.-%, bevorzugt von 15 bis 70 Gew.-%, besonderes bevorzugt von 20 bis 55 Gew.-%, in der jeweiligen Brandschutzschicht enthalten ist, bezogen auf die Summe des Festkörpergehalts des Trägermaterials und des physikalisch wirkenden Treibmittels.

Vorzugsweise beträgt die Menge an physikalisch wirkenden Treibmittel bezogen auf das Gesamtgewicht des Schichtkörpers von 8 bis 70 Gew.-%, bevorzugt von 12 bis 55 Gew.-% und insbesondere von 15 bis 40 Gew.-%.

Es kann vorgesehen sein, dass das Trägermaterial weiterhin mindestens eine organische und/oder anorganische Faser umfasst, welche insbesondere aus der Gruppe bestehend aus Glasfaser, Keramikfaser, Carbonfaser, Polyamidfaser, Metallfaser, Borfaser, Naturfaser, Steinfaser und Mischungen davon ausgewählt ist. Besonders geeignete Fasern sind Glasfasern und/oder Metallfasern, insbesondere aus E-Glas, Silikatfasern oder Mineralwollfasern.

Die organischen bzw. anorganischen Fasern haben bevorzugt eine Länge von 1 mm bis 25 mm, stärker bevorzugt von 2 mm bis 20 mm und besonders bevorzugt von 3 mm bis 15 mm. Beispielhaft können hier Glasfasern der Firma STW erwähnt werden.

Die organischen bzw. anorganischen Fasern sind bevorzugt in einer Menge von 0,1 bis 25,0 Gew.-%, bevorzugt von 0,5 bis 15,0 Gew.-%, besonderes bevorzugt von 1,0 bis 6,0 Gew.-% in der jeweiligen Brandschutzschicht enthalten, bezogen auf die Summe des Festkörpergehalts des Trägermaterials und des physikalisch wirkenden Treibmittels.

Da die im Brandfall gebildete Aschekruste unter Umständen zu instabil ist und daher abhängig von deren Dichte und Struktur etwa durch Luftströmungen verblasen werden kann, was sich negativ auf die abschottende Wirkung des Brandschutzelementes auswirkt, kann das Trägermaterial zusätzlich mindestens einen Aschekrustenstabilisator enthalten.

Ein "*Aschekrustenstabilisator*" ist eine sogenannte gerüstbildende Verbindung, die das Kohlenstoffgerüst (Aschekruste), das aus dem physikalisch wirkenden Treibmittel und dem Trägermaterial gebildet wird, stabilisiert. Die prinzipielle Wirkungsweise ist dabei die, dass die an sich sehr weichen entstehenden Kohlenstoffschichten durch anorganische Verbindungen unter anderem mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abfallen verhindern, wodurch die isolierende Wirkung aufrechterhalten oder verstärkt wird.

Als Aschekrustenstabilisatoren bzw. Gerüstbildner kommen die üblicherweise in Brandschutzformulierungen verwendeten und dem Fachmann bekannten Verbindungen in Betracht, beispielsweise teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengröße von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, und/oder ein Borat, wie Zinkborat. Beispiele derartiger Additive finden sich auch in US 4 442 157 A, US 3 562 197 A, GB 755 551 A sowie EP 138 546 A1.

Bevorzugt ist der Aschekrustenstabilisator eine phosphorhaltige Verbindung, die unter Salzen und Derivaten der Oxosäuren des Phosphors ausgewählt ist. Die Oxosäuren des Phosphors werden eingesetzt, da deren Palette sehr groß ist. Bei den Oxosäuren des Phosphors handelt es sich um Phosphorsäure (H₃PO₄) (auch als Orthophosphorsäure bezeichnet), Diphospohrsäure (H₄P₂O₇) (auch als Pyrophosphorsäure bezeichnet), Triphosphorsäure (H₅P₃O₁₀), Polyphosphorsäure (Hₙ₊₂PₙO₃ₙ₊₁), Polymetaphosphorsäure ((HPO₃)ₙ), Hypophosphorsäure (H₄P₂O₆) (auch Diphosphor(IV)-säure), Diphosphor(III,V)-säure (H₄P₂O₆), Phosphonsäure (H₃PO₂(2)), wobei die Zahl in der Klammer die maximale Basigkeit der Säure bezeichnet, wenn diese sich von der Gesamtzahlt der H-Atome in der Formel unterscheidet) (auch als phosphorige Säure bezeichnet), Diphosphonsäure (H₄P₂O₅(2)), wobei die Zahl in der Klammer die maximale Basigkeit der Säure bezeichnet, wenn diese sich von der Gesamtzahlt der H-Atome in der Formel unterscheidet) (auch als diphosphorige Säure bezeichent), Phosphinsäure (H₃PO₂(1)), wobei die Zahl in der Klammer die maximale Basigkeit der Säure bezeichnet, wenn diese sich von der Gesamtzahlt der H-Atome in der Formel unterscheidet.

Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminpolyphosphate, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen.

Der Aschekrustenstabilisator ist bevorzugt in einer Menge von etwa 5 bis 35 Gew.-%, bevorzugt 7 bis 30 Gew.-%, besonders bevorzugt 10 bis 28 Gew.-%, in der jeweiligen Brandschutzschicht enthalten, bezogen auf die Summe des Festkörpergehalts des Trägermaterial und des physikalisch wirkenden Treibmittels.

Darüber hinaus können weitere Brandschutzadditive, insbesondere solche, die eine chemische Intumeszenz bewirken, und solche, welche ablativ wirken, in der Zusammensetzung enthalten sein. Als "*chemische Intumeszenz*" wird die Bildung einer voluminösen, isolierenden Ascheschicht durch aufeinander abgestimmte Verbindungen, die bei Hitzeeinwirkung miteinander reagieren, bezeichnet. Diese sind im Allgemeinen ein Kohlenstofflieferant, ein Säurebildner und ein Gasbildner.

Als "*Kohlenstofflieferant*" wird eine organische Verbindung bezeichnet, die durch unvollständige Verbrennung ein Kohlenstoffgerüst hinterlässt und nicht vollständig zu Kohlendioxid und Wasser verbrennt (Carbonifizierung). Diese Verbindungen werden auch als "*Kohlenstoffgerüstbildner*" bezeichnet. Als "*Säurebildner*" wird eine Verbindung bezeichnet, die sich unter Hitzeeinwirkung, d.h. oberhalb etwa 150°C beispielsweise durch Zersetzung eine nicht flüchtige Säure bildet und dadurch als Katalysator für die Carbonifizierung wirkt. Zudem kann sie zur Erniedrigung der Viskosität der Schmelze des Trägermaterials beitragen. Hiermit gleichbedeutend wird der Begriff "*Dehydrierungskatalysator*" verwendet. Ein "*Gasbildner*" ist eine Verbindung, die sich bei erhöhter Temperatur unter Entwicklung inerter, d.h. nicht-brennbarer Gase zersetzt und das durch die Carbonifizierung gebildet Kohlenstoffgerüst und gegebenenfalls das erweichte Bindemittel zu einem Schaum aufbläht (Intumeszenz).

Gegebenenfalls kann das Trägermaterial weitere übliche Zusätze enthalten, wie Weichmacher, Füllstoffe, Pigmente, Additive zur Einstellung der rheologischen Eigenschaften, Verdickungsmittel, Dispergierhilfsmittel, Emulgatoren, Biozide, Fungizide, Konservierungs- und Alterungsschutzmittel, Frostschutzmittel, Netzmittel, Entschäumer und/oder Hautbildungsverzögerer. Diese weiteren Zusätze sind handelsübliche Produkte, die dem Fachmann bekannt sind.

Als Füllstoffe können die üblicherweise verwendeten und dem Fachmann bekannten Füllstoffe verwendet werden. Als Füllstoffe können beispielhaft erwähnt werden: Kreide, Bariumsulfat, Quarz, Talkum, Kaolin, Calciumsulfat und/oder Calciumsilikat. Der Füllstoff kann alleine oder als Gemisch von zwei oder mehreren verwendet werden.

Als Pigmente kann das Trägermaterial vorzugsweise Eisenoxid, Titandioxid, Zinksulfid, Zinkoxid und/oder organische oder anorganische Farbpigmente enthalten.

Als Additive zur Einstellung der rheologischen Eigenschaften kann das Trägermaterial beispielsweise hochdisperse Kieselsäure, Bentonite oder modifizierte Bentonite, Polyacrylate und/oder Cellulosederivate, wie Celluloseether, enthalten.

Die Additive können in einer Menge von etwa 0,25 bis 2,5 Gew.-%, bevorzugt 0,5 bis 1,7 Gew.-%, besonders bevorzugt 0,8 bis 1,6 Gew.-%, in der jeweiligen Brandschutzschicht enthalten, bezogen auf die Summe des Festkörpergehalts des Trägermaterials und des physikalisch wirkenden Treibmittels. Vorzugsweise weisen die Brandschutzschichten jeweils eine mittlere maximale Schichtdicke von ≤ 10 mm, bevorzugter von ≤ 8 mm und besonders bevorzugt von ≤ 5 mm auf. In einer bevorzugten Ausführungsform hat die Brandschutzschicht eine mittlere Schichtdicke von 0,5 mm bis 4,6 mm. Die zwei oder mehr Brandschutzschichten des Schichtkörpers können gleiche oder unterschiedliche mittlere Schichtdicken aufweisen. Es ist jedoch bevorzugt, dass die Brandschutzschichten des Schichtkörpers annähernd gleiche mittlere Schichtdicken aufweisen.

Die Funktionsschicht, die zwischen den Brandschutzschichten angeordnet ist, hat erfindungsgemäß eine Temperaturbeständigkeit bis mindestens 300 °C. Bevorzugt hat die Funktionsschicht eine Temperaturbeständigkeit bis mindestens 400 °C, bevorzugter bis mindestens 450 °C, weiter bevorzugt bis mindestens 500 °C, und am meisten bevorzugt bis mindestens 550 °C. Im Sinne der vorliegenden Erfindung ist unter dem Begriff der Temperaturbeständigkeit die Widerstandsfähigkeit der Funktionsschicht gegenüber hohen Temperaturen zu verstehen. Beim Überschreiten der Temperaturbeständigkeit können sich die temperaturabhängigen Eigenschaften so stark ändern, dass das Material nicht mehr den Anforderungen genügt oder zerstört wird. Im Sinne der vorliegenden Erfindung bedeutet Temperaturbeständigkeit insbesondere, dass bis zur angegebenen Temperaturgrenze keine Zersetzung, kein Schmelzen oder Verbrennen oder sonstige gravierende Änderung der Materialeigenschaften stattfindet, wodurch die Wirkungsweise der Funktionsschicht verloren geht.

Die Funktionsschicht erstreckt sich vorzugsweise kontinuierlich zwischen den Brandschutzschichten. Darunter ist zu verstehen, dass innerhalb des Schichtkörpers die Funktionsschicht nicht unterbrochen ist.

Es ist erfindungswesentlich, dass die Funktionsschicht mindestens ein semi-rigides Material umfasst bzw. bevorzugt aus mindestens einem semi-rigiden Material besteht.

Unter dem Ausdruck "*semi-rigides Material*" im Sinne der vorliegenden Erfindung ist ein Material zu verstehen, welches sowohl eine ausreichende mechanische Festigkeit aufweist, um den von der Brandschutzschicht ausgehenden Blähdruck aufnehmen zu können, als auch eine ausreichende Flexibilität, so dass die Expansion des physikalisch wirkenden Treibmittels nicht behindert wird.

Vorzugsweise wird das semi-rigide Material ausgewählt aus der Gruppe bestehend aus Faserverbundmaterialien, Metallen, Metalllegierungen und Kombinationen daraus.

In einer Ausführungsform der Erfindung umfasst die Funktionsschicht ein Faserverbundmaterial. Es kann vorgesehen sein, dass das Faserverbundmaterial eine technische Faser aus der Gruppe bestehend aus Glasfaser, Keramikfaser, Carbonfaser, Polyamidfaser, Metallfaser, Borfaser, Naturfaser, Steinfaser und Mischungen davon, umfasst. Es ist dabei vorteilhaft, dass das Faserverbundmaterial aus Mono- und/oder Endlosfilamenten aufgebaut ist, die einen stabilen Endlosfaden ergeben. Diese Endlosfäden sind vorzugsweise so miteinander verbunden, dass sie eine hohe Zugfestigkeit aufweisen.

In einer anderen Ausführungsform der Erfindung wird die Funktionsschicht gebildet aus einem oder mehreren Metallen und/oder einer oder mehreren Metalllegierungen, insbesondere aus Aluminium und/oder Eisen.

Vorzugsweise wird die Funktionsschicht aus einer in mindestens zwei Dimensionen durchgängigen Struktur gebildet. Dabei ist es bevorzugt, dass die Funktionsschicht als Folie, als perforierte Platte, als Matte, als Gitter oder als Gewebe ausgebildet ist.

Es hat sich als vorteilhaft erwiesen, dass das semi-rigide Material ausgewählt ist aus der Gruppe bestehend aus Streckmetall, Glasfasermaterial, Aluminiumfolie und Kombinationen daraus.

Bevorzugt umfasst das semi-rigide Material ein Glasfasermaterial, insbesondere ein Glasfaservlies, Glasfasergelege, Glasfasergewirke, ein Glasfasergewebe oder Kombinationen daraus. Um eine ausreichende Temperaturstabilität bei Glasfasermaterialien zu erzielen, die keine direkte Verwebung aufweisen, wie beispielsweise Glasfaservlies oder Glasfasergewirken, müssen die einzelnen Fäden untereinander mittels eines Klebstoffes fixiert werden, der eine ausreichende Temperaturstabilität aufweist. Hierfür eignen sich beispielsweise Epoxid-basierte Klebstoffe, die vorzugsweise eine Temperaturstabilität von mindestens 180 °C, bevorzugter von mindestens 205 °C und insbesondere von mindestens 220 °C aufweisen. Das Glasfasermaterial weist vorzugsweise ein Flächengewicht im Bereich von 50 bis 1500 g/m², bevorzugt im Bereich von 100 bis 1300 g/m², bevorzugter 150 g/m² bis 900 g/m² und insbesondere im Bereich von 180 bis 700 g/m² auf. Es ist bevorzugt, dass das Glasfasermaterial ein mit Stahlfasern verstärktes Glasmaterial ist, insbesondere ein mit Stahlfasern verstärktes Glasfasergewebe. Entsprechende mit Stahlfasern verstärkte Glasfasergewebe sind beispielsweise von der Firma HKO erhältlich.

In einer besonders bevorzugten Ausführungsform ist das semi-rigide Material ein Glasfasergewebe und die Funktionsschicht besteht daraus, insbesondere weist das Glasfasergewebe ein Flächengewicht von 180 bis 700 g/m² auf.

Alternativ umfasst das semi-rigide Material vorzugsweise mindestens ein Streckmetall. Das Streckmetall weist vorzugsweise eine mittlere Maschenweite von ≤ 15 mm x 10 mm, bevorzugt ≤ 12 mm x 9 mm und insbesondere ≤ 10,5 mm x 7 mm auf, wobei die Untergrenze der der mittleren Maschenweite jeweils bei ≥ 1,2 mm x 0,6 mm liegt. In einer besonders bevorzugten Ausführungsform ist das semi-rigide Material ein Streckmetall und die Funktionsschicht besteht daraus, insbesondere weist das Streckmetall eine mittlere Maschenweite von 6 mm x 3,4 mm bis 2,5 mm x 1,7 mm auf.

Die mittlere Schichtdicke der Funktionsschicht kann prinzipiell kleiner, gleich oder größer als die mittlere Schichtdicke der Brandschutzschicht sein. Zweckmäßig liegt das Verhältnis der mittleren Schichtdicke einer Brandschutzschicht zur mittleren Schichtdicke einer Funktionsschicht im Schichtkörper in einem Verhältnis von 1:3 bis 10:1. Ist die Funktionsschicht sehr dünn ausgestaltet, wie beispielsweise ≤ 50 µm, kann das Verhältnis auch vom vorgenannten Bereich abweichen. Hier ist das Verhältnis der mittleren Schichtdicke der Brandschutzschicht zur mittleren Schichtdicke der Funktionsschicht im Brandschutzelement vorzugsweise in einem Verhältnis von 1:1 bis 50:1. Vorzugsweise hat die Funktionsschicht eine maximale mittlere Schichtdicke von ≤ 5 mm, bevorzugter von ≤ 2,5 mm und besonders bevorzugt von ≤ 1 mm. In einer bevorzugten Ausführungsform hat die Funktionsschicht eine Schichtdicke von 8 µm bis 1,5 mm.

Wenn der Schichtkörper mehr als eine Funktionsschicht aufweist, können die Funktionsschichten gleich oder verschieden sein. In diesem Fall ist es jedoch vorteilhaft, dass die im Schichtkörper vorhandenen Funktionsschichten möglichst gleich aufgebaut sind. Die zwei oder mehr Funktionsschichten des Schichtkörpers können gleiche oder unterschiedliche mittlere Schichtdicken aufweisen. Es ist jedoch bevorzugt, wenn die Funktionsschichten des Schichtkörpers annähernd gleiche mittlere Schichtdicken aufweisen.

Optional können eine oder mehrere Brandschutzschichten und/oder eine oder mehrere Funktionsschichten zusätzlich eine oder mehrere Zwischenschichten (6) aufweisen. Als Zwischenschicht kommt beispielsweise eine Klebeschicht in Betracht, die verwendet wird, um zumindest eine partiell stoffschlüssige Verbindung zwischen den Brandschutzschichten und der Funktionsschicht herzustellen. Zur Herstellung der Klebeschicht kommen die üblicherweise verwendeten und dem Fachmann bekannten Materialien in Betracht. Hierzu zählen beispielsweise die in der Schrift EP1161348 A1 aufgeführten Materialien, deren Inhalt hiermit in die vorliegende Anmeldung aufgenommen wird.

Vorzugsweise weist die Zwischenschicht eine mittlere maximale Schichtdicke von ≤ 0,1 mm, bevorzugter von ≤ 0,05 mm und besonders bevorzugt von ≤ 0,025 mm auf. In einer bevorzugten Ausführungsform hat die Zwischenschicht eine Schichtdicke von 5 µm bis 0,025 mm. Umfasst das erfindungsgemäße Brandschutzelement zwei oder mehr Zwischenschichten, so können diese Zwischenschichten die gleiche oder unterschiedliche Schichtdicken aufweisen. Es ist bevorzugt, dass die Zwischenschichten des Brandschutzelementes annährend gleiche Schichtdicken aufweisen.

Es ist aber auch möglich eine im Wesentlichen stoffschlüssige Verbindung ohne die Verwendung einer Klebeschicht herzustellen. In dieser bevorzugten Ausführungsform wird die Funktionsschicht in das noch nicht getrocknete Trägermaterial der Brandschutzschicht gelegt und/oder gepresst und anschließend erfolgt die Härtung des Trägermaterials durch physikalisches Trocken.

Zur Ausbildung des Schichtkörpers im Sinne der vorliegenden Erfindung können theoretisch eine hohe Anzahl an Brandschutzschichten und Funktionsschichten miteinander kombiniert werden. Es ist jedoch zweckmäßig, dass für den Einsatz im erfindungsgemäßen Brandschutzelement, der Schichtkörper insgesamt maximal 21 Schichten (Summe aus Brandschutzschichten und Funktionsschichten) aufweist.

Das erfindungsgemäße Brandschutzelement kann in allen Formen ausgestaltet sein, die geometrisch den Einsatz als Brandschutzelement ermöglichen. In einer bevorzugten Ausführungsform ist das Brandschutzelement streifenförmig ausgestaltet und liegt in Form einer Endlosbandage vor.

### Kurzbeschreibung der Zeichnungen

Ausführungsformen werden anhand der beigefügten Zeichnungen näher erläutert.
- Figur 1: zeigt eine Querschnittsdarstellung einer Ausführungsform eines erfindungsgemäßen Brandschutzelementes;
- Figur 2: zeigt eine Querschnittsdarstellung einer alternativen bevorzugten Ausführungsform eines erfindungsgemäßen Brandschutzelements;
- Figur 3: zeigt eine Querschnittsdarstellung einer weiteren alternativen bevorzugten Ausführungsform eines erfindungsgemäßen Brandschutzelements;
- Figur 4: zeigt eine Querschnittsdarstellung eines erfindungsgemäß bevorzugten Schichtkörpers mit zwei Brandschutzschichten und zwei Funktionsschichten;
- Figur 5: zeigt eine Querschnittsdarstellung eines erfindungsgemäß bevorzugten Schichtkörpers mit drei Brandschutzschichten und zwei Funktionsschichten;
- Figur 6: zeigt eine Querschnittsdarstellung einer bevorzugten Ausführungsform eines erfindungsgemäßen Brandschutzelementes mit zusätzlichen in den Brandschutzschichten angeordneten Zwischenschichten.

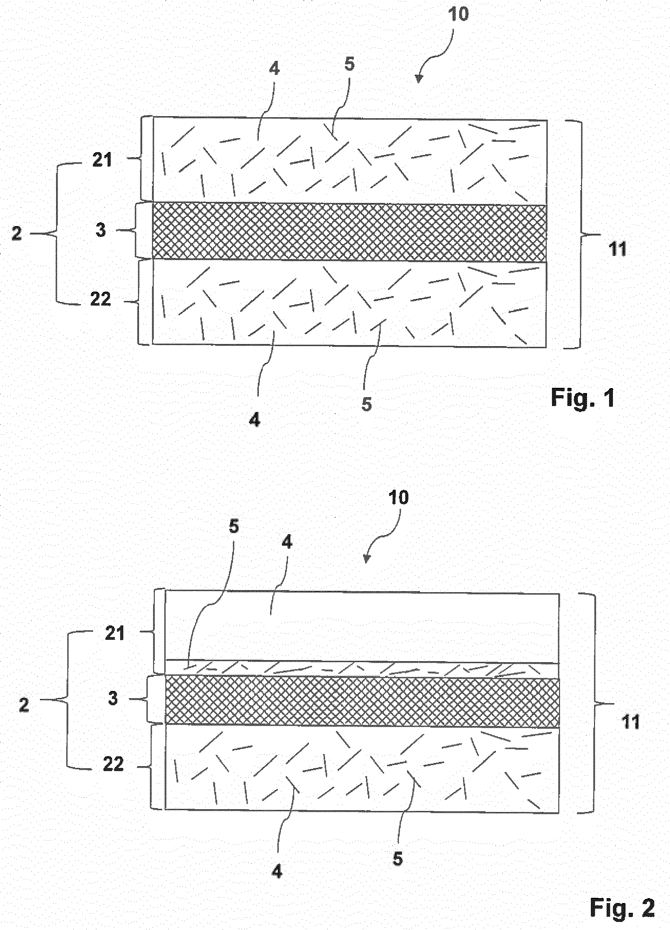

In Figur 1 ist eine Querschnittsdarstellung einer Ausführungsform eines erfindungsgemäßen Brandschutzelementes (10) mit einem dreischichtigen Schichtkörper (11) dargestellt. Der Schichtkörper (11) umfasst die beiden Brandschutzschichten (21) und (22). Zwischen den beiden Brandschutzschichten (21) und (22) ist eine Funktionsschicht (3) angeordnet, die zur Bildung des Schichtkörpers (11) jeweils im Wesentlichen stoffschlüssig mit der Brandschutzschicht (21) und der Brandschutzschicht (22) verbunden ist. Die Brandschutzschichten umfassen jeweils ein Trägermaterial (4) und ein physikalisch wirkendes Treibmittel (5), wobei das physikalisch wirkende Treibmittel (5) innerhalb des Trägermaterials eingebettet ist und im Wesentlichen gleichmäßig innerhalb des Trägermaterials verteilt ist.

In Figur 2 ist eine Querschnittsdarstellung einer alternativen Ausführungsform eines erfindungsgemäßen Brandschutzelementes (10) mit einem dreischichtigen Schichtkörper (11) dargestellt. Der Schichtkörper (11) umfasst die beiden Brandschutzschichten (21) und (22). Zwischen den beiden Brandschutzschichten (21) und (22) ist eine Funktionsschicht (3) angeordnet, die zur Bildung des Schichtkörpers (11) jeweils im Wesentlichen stoffschlüssig mit der Brandschutzschicht (21) und der Brandschutzschicht (22) verbunden ist. Die Brandschutzschichten umfassen jeweils ein Trägermaterial (4) und ein physikalisch wirkendes Treibmittel (5). In der Brandschutzschicht (22) ist das physikalisch wirkende Treibmittel (5) innerhalb des Trägermaterials eingebettet und im Wesentlichen gleichmäßig innerhalb des Trägermaterials verteilt. In der Brandschutzschicht (21) ist das physikalisch wirkende Treibmittel (5) auf der Fläche der Oberfläche des Trägermaterials (4) aufgebracht, die der Funktionsschicht (3) zugewandt ist.

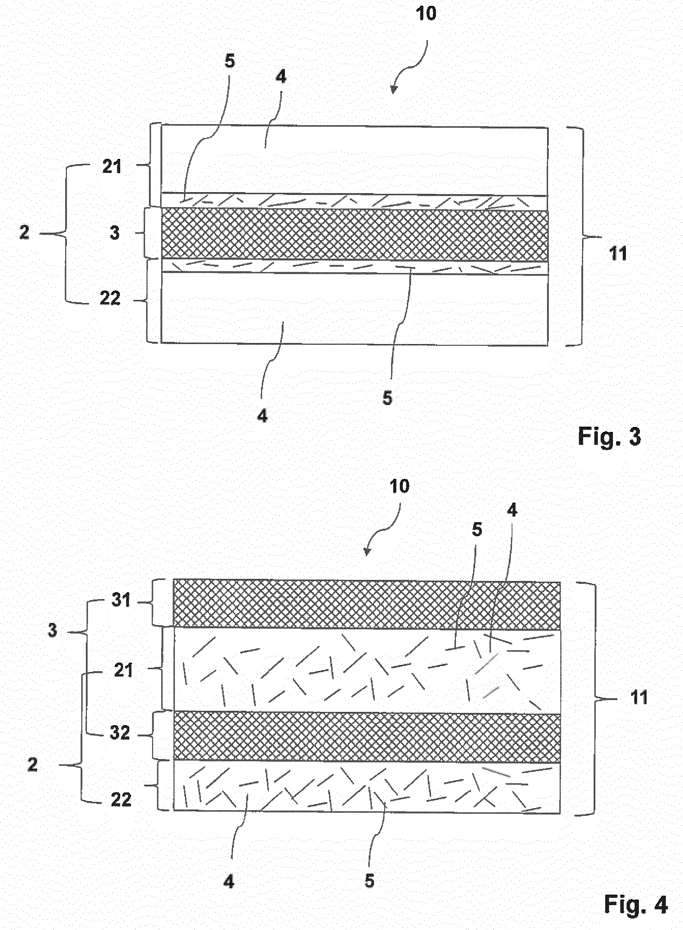

Figur 3 zeigt eine Querschnittsdarstellung einer weiteren alternativen bevorzugten Ausführungsform eines erfindungsgemäßen Brandschutzelements (10) mit einem dreischichtigen Schichtkörper (11). In den beiden Brandschutzschichten (21) und (22) ist das physikalisch wirkende Treibmittel (5) auf der Fläche der Oberfläche des Trägermaterials (4) aufgebracht, die der Funktionsschicht (3) zugewandt ist.

Figur 4 zeigt eine Querschnittsdarstellung eines erfindungsgemäßen Brandschutzelementes (10) mit einem Schichtkörper (11) umfassend zwei Brandschutzschichten (21) und (22) sowie zwei Funktionsschichten (31) und (32). Die Funktionsschicht (32) ist zwischen den Brandschutzschichten (21) und (22) angeordnet und die Funktionsschicht (31) auf der Brandschutzschicht (21), wobei die zueinander benachbarten Brandschutzschichten (2) und Funktionsschichten (3) im Wesentlichen stoffschlüssig miteinander verbunden sind. Der Schichtkörper (11) hat somit einen vierschichtigen Aufbau. Die Brandschutzschichten umfassen jeweils ein Trägermaterial (4) und ein physikalisch wirkendes Treibmittel (5), wobei das physikalisch wirkende Treibmittel (5) innerhalb des Trägermaterials eingebettet ist. Die Brandschutzschichten (21) und (22) zeigen unterschiedliche Schichtdicken und die Funktionsschichten (31) und (32) weisen gleiche Schichtdicken auf.

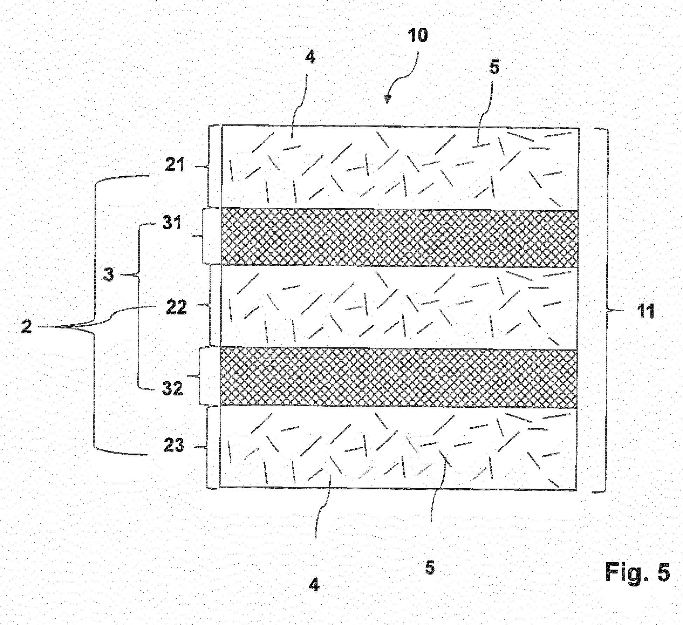

Figur 5 zeigt eine Querschnittsdarstellung eines erfindungsgemäßen Brandschutzelementes (10) umfassend einen Schichtkörper (11) mit drei Brandschutzschichten (21), (22) und (23) und zwei Funktionsschichten (31) und (32). Die Funktionsschicht (31) ist zwischen den Brandschutzschichten (21) und (22) angeordnet und die Funktionsschicht (32) zwischen den Brandschutzschichten (22) und (23), wobei die zueinander benachbarten Brandschutzschichten (2) und Funktionsschichten (3) im Wesentlichen stoffschlüssig miteinander verbunden sind.

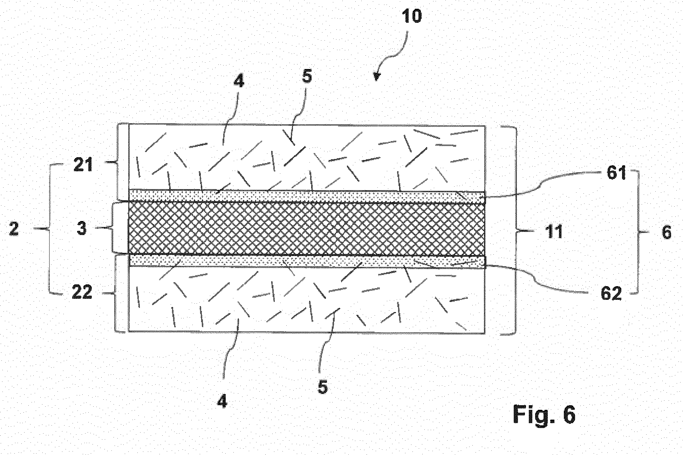

Figur 6 zeigt eine Querschnittsdarstellung einer bevorzugten Ausführungsform eines erfindungsgemäßen Brandschutzelementes (10) mit einem Schichtkörper (11) umfassend die beiden Brandschutzschichten (21) und (22). Zwischen den beiden Brandschutzschichten (21) und (22) ist eine Funktionsschicht (3) angeordnet. Die Brandschutzschichten (21) und (22) umfassen zusätzlich jeweils eine Zwischenschicht (61) und (62), beispielsweise in Form einer Klebeschicht, zur Herstellung einer im Wesentlich stoffschlüssigen Verbindung der zueinander benachbarten Brandschutzschicht (2) und Funktionsschicht (3).

Die Erfindung ist nicht auf die gezeigten Ausführungsformen beschränkt. Insbesondere können einzelne Merkmale einer Ausführungsform unabhängig von den anderen Merkmalen der entsprechenden Ausführungsform in einer weiteren erfindungsgemäßen Ausführungsform enthalten sein, d.h. die beschriebenen Merkmale sind beliebig miteinander kombinierbar.

Gemäß einem zweiten Aspekt der vorliegenden Erfindung ist ein Verfahren zur Herstellung des erfindungsgemäßen Brandschutzelementes vorgesehen. Das erfindungsgemäße Verfahren umfasst die folgenden Schritte:
i) Bereitstellen einer ersten Brandschutzschicht (21),
ii) Bereitstellen einer Funktionsschicht (3),
iii) Verbinden der Brandschutzschicht (21) mit der Funktionsschicht (3) zur Herstellung eines zweischichtigen Schichtkörpers,
iv) Bereitstellen einer zweiten Brandschutzschicht (22),
v) Verbinden der zweiten Brandschutzschicht (22) mit dem in Schritt iii) hergestellten zweischichtigen Schichtkörpers sowie
vi) Herstellen einer im Wesentlichen stoffschlüssigen Verbindung zwischen den Brandschutzschichten (21) und (22) und der zwischen den Brandschutzschichten (21) und (22) angeordneten Funktionsschicht (3).

Die zuvor getätigten Ausführungen in Bezug auf das erfindungsgemäße Brandschutzelement gelten gleichermaßen für das erfindungsgemäße Verfahren, soweit anwendbar.

Das Herstellen einer im Wesentlichen stoffschlüssigen Verbindung zwischen den Brandschutzschichten und der zwischen den Brandschutzschichten angeordneten Funktionsschicht wird vorzugsweise durch Ausübung von Druck, beispielsweise durch Verpressen, herbeigeführt und/oder durch die Verwendung einer geeigneten Zwischenschicht, beispielsweise in Form einer Klebschicht. Es ist aber auch möglich ein Brandschutzelement im Sinne der vorliegenden Erfindung herzustellen, indem zunächst eine Funktionsschicht (3) bereitgestellt wird, welche in eine Formulierung enthaltend ein Trägermaterial und zumindest ein physikalisch wirkendes Treibmittel eingegossen wird. Durch Trocknen bzw. Aushärten der entsprechenden Formulierung werden die Brandschutzschichten (2) erhalten zwischen denen die Funktionsschicht (3) angeordnet ist.

Gegenstand der vorliegenden Erfindung ist ferner die Verwendung eines erfindungsgemäßen Brandschutzelements zur Abdichtung von Durchgangsöffnungen und/oder Fugen in Bauelementen gegen Feuer und Rauchgase

Die Erfindung wird anhand der nachfolgenden Beispiele näher erläutert.

### AUSFÜHRUNGSBEISPIELE

Es wurden die Formulierungen 1 und 2 mit den in Tabelle 1 spezifizierten Bestandteilen hergestellt, in dem die angegebenen Bestandteile miteinander vermischt wurden. Die hergestellten Formulierungen umfassen ein Trägermaterial sowie ein physikalisch wirkendes Treibmittel und können als Ausgangsmaterial zur Herstellung der Brandschutzschichten dienen. Die entsprechenden Bestandteile sind in der nachstehenden Tabelle spezifiziert.

**Tabelle 1: Bestandteile Ausgangsmaterial zur Herstellung der Brandschutzschichten**

| | **1** [Gew.-%] | **2** [Gew.-%] |
|---|---|---|
| Wässrige Acrylat-Dispersion (65% Acrylat und 35% Wasser) | 29,00 | 42,0 |
| Blähgraphit (Kaisersberg) | 6,00 | 44,0 |
| Ammoniak (Ammoniumhydroxid, 25 % in Wasser) | 1,26 | 0,1 |
| Glasfaser Kurzschnitt (Durchmesser ∼10 µm, Länge 6 mm) | 1,10 | 5,2 |
| Ammoniumpolyphosphat | 10,0 | 8,7 |
| Emulgator | 0,20 | - |
| Dispergiermittel | 0,50 | - |
| Weichmacher (Indopol) | 5,50 | - |
| Monopropylenglycol | 1,00 | - |
| Fungizid | 0,30 | - |
| Verdicker | 0,14 | - |
| Wasser | 8,40 | - |
| Kaolin (Capsil 2004) | 25,60 | - |
| Schaumglaskugeln (Poraver 40-125 µm) | 10,00 | - |
| Eisenoxid | 1,00 | - |

Die aus den Formulierungen 1 und 2 erhaltenen Massen wurden zu einer streifenförmigen Brandschutzschicht ausgeformt. Dazu wurden die erhaltenen Massen mit einer Walze auf die gewünschte Schichtdicke ausgerollt. Zur Herstellung von erfindungsgemäßen Brandschutzelementen wurden unterschiedliche semi-rigide Materialien als Funktionsschicht verwendet. Es wurden Brandschutzelemente mit einem dreischichtigen Aufbau aus zwei Brandschutzschichten und einer zwischen den Brandschutzschichten angeordneten Funktionsschicht hergestellt. Die jeweils benachbarten Brandschutzschichten und Funktionsschichten wurden im Wesentlichen stoffschlüssige durch Anpressen miteinander verbunden. Wenn durch das Anpressen keine im Wesentlichen stoffschlüssige Verbindungen erhalten werden konnte, wurde zwischen den Schichten zusätzlich eine geringe Menge der wässrigen Acrylat-Dispersion aufgebracht, um eine im Wesentlichen stoffschlüssige Verbindung zu erhalten.

Das semi-rigide Material der Funktionsschicht ist in den Tabellen 2 und 3 spezifiziert.

Zur Bestimmung der Expansionseigenschaften der Brandschutzelemente wurde ein Gerät zur Funktionsersatzprüfung verwendet, mit der die Höhe der Expansion (Richtung der Expansion nach oben) ermittelt werden konnte. Zum Vergleich der unterschiedlichen Brandschutzelemente wurde aus diesen Messungen der sogenannte Expansionsfaktor bestimmt, der den Quotient aus Expansionshöhe des jeweiligen Brandschutzelements zum Gesamtgewicht aller Brandschutzschichten des Brandschutzelements dargestellt. Das Messgerät zur Durchführung der Funktionsersatzprüfung bestand aus zwei horizontal angeordneten beheizbaren Platten. Die obere Platte wies ein konstantes Gewicht auf. Zu messende Brandschutzelemente (kreisförmig, Durchmesser 45 mm) wurden zwischen den beheizbaren Platten angeordnet und einem Temperaturprogramm ausgesetzt (Starttemperatur 50 °C, Heizrate 20 °C/min, Zwischentemperatur 100 °C (5 min), Heizrate 20 °C, Endtemperatur 500 °C (15 min Haltezeit). Die obere Platte war in der Lage die Expansion der Brandschutzelemente in die Höhe aufzuzeichnen.

In einem Expansionsversuch wurde zunächst gezeigt, dass Brandschutzelemente mit mehreren dünneren Brandschutzschichten ohne Funktionsschicht, die gleiche Performance zeigen, wie ein Brandschutzelement mit nur einer Brandschutzschicht gleicher Schichtdicke (Summe der Schichtdicken aller Brandschutzschichten).

Zum Vergleich unterschiedlicher Funktionsschichten wurde die relative Performance von Brandschutzelementen ermittelt, die definiert ist als der Quotient aus dem Expansionsfaktor eines Brandschutzelementes mit Zwischenschicht und dem Expansionsfaktor einer Referenzprobe ohne Zwischenschicht. Der Expansionsfaktor wird anhand einer Referenzgeraden, welche vorab durch Messung des Expansionsverhaltens mit verschieden dicken Proben erstellt wurde. Alle Brandschutzelemente mit einer relativen Performance von größer 1 zeigen eine verbesserte Performance und sind erfindungsgemäß. Die ermittelten Referenzgerade für die beiden Formulierungen 1 und 2 sind in den Beschriftungen der Tabellen 2 und 3 angegeben.

**Tabelle 2: Relative Performance verschiedener Funktionsschichten, Brandschutzschichten gemäß Formulierung 1. Der Expansionsfaktor y wurde anhand der Referenzgerade y = 8,23 * x^{-1,46} berechnet (x = Gewicht der Probe), welche anhand von Brandschutzschichten mit unterschiedlichen Dicken ermittelt wurde (Durchmesser 4,5 cm; ca. 5,0 bis 17,0 g; R² = 0,98)**

| **Funktionsschicht (alle Maße in mm)** | **Relative Performance** |
|---|---|
| Standard ohne Zwischenschicht | 1,00 |
| Glasfasergewebe (Kreuzkörper, Flächengewicht 200 g/m²; Dicke 0,25 mm; Fadenzahl Kette/Schuss 17/12; Höchstzugkraft Kette/Schuss < 2500/ > 1800 N/5cm gemäß ISO 4606) | 1,73 |
| Aluminiumfolie (30 µm) | 1,11 |
| Streckmetall (Aluminium 99,5 hh, Stegbreite 0,5, Stegdicke 0,5, Maschenweite 6,0, Maschenhöhe 3,4, Gesamtdicke 1,0) | 1,51 |

**Tabelle 3: Relative Performance verschiedener Funktionsschichten, Brandschutzschichten gemäß Formulierung 2. Der Expansionsfaktor y wurde anhand der Referenzgerade y = 16,66 * x^{-1,52} berechnet (x = Gewicht der Probe), welche anhand von Brandschutzschichten mit unterschiedlichen Dicken ermittelt wurde (Durchmesser 4,5 cm; ca. 7,0 bis 18,0 g; R² = 0,95)**

| **Funktionsschicht (alle Maße in mm)** | **Relative Performance** |
|---|---|
| Standard ohne Zwischenschicht | 1,00 |
| Glasfasergewebe (Kreuzkörper, Flächengewicht 200 g/m²; Dicke 0,25 mm; Fadenzahl Kette/Schuss 17/12; Höchstzugkraft Kette/Schuss < 2500/ > 1800 N/5cm gemäß ISO 4606) | 1,43 |
| Aluminiumfolie (30 µm) | 1,17 |
| Streckmetall (Aluminium 99,5 hh, Stegbreite 0,5, Stegdicke 0,5, Maschenweite 6,0, Maschenhöhe 3,4, Gesamtdicke 1,0) | 1,38 |

## Patentansprüche

1. Brandschutzelement (10) umfassend einen Schichtkörper (11) enthaltend mindestens zwei Brandschutzschichten (2) und mindestens eine zwischen den Brandschutzschichten (2) angeordnete Funktionsschicht (3), wobei
i) die Brandschutzschichten (2) jeweils ein Trägermaterial (4) und mindestens ein physikalisch wirkendes Treibmittel (5) umfassen und
ii) die Funktionsschicht (3) eine Temperaturbeständigkeit bis mindestens 300 °C aufweist,
**dadurch gekennzeichnet, dass** zur Bildung des Schichtkörpers (11) die Brandschutzschichten (2) und die zwischen den Brandschutzschichten angeordnete Funktionsschicht (3) im Wesentlichen stoffschlüssig miteinander verbunden sind und die Funktionsschicht (3) mindestens ein semi-rigides Material umfasst.

2. Brandschutzelement (10) nach Anspruch 1, **dadurch gekennzeichnet, dass** das physikalisch wirkende Treibmittel (5) in das Trägermaterial (4) eingebettet ist.

3. Brandschutzelement (10) nach Anspruch 1, **dadurch gekennzeichnet, dass** das physikalisch wirkende Treibmittel (5) auf einer oder mehreren Flächen der Oberflache des Trägermaterials (4) angebracht ist, insbesondere auf der der Funktionsschicht (3) zugewandten Fläche.

4. Brandschutzelement (10) nach einem der vorhergehenden Ansprüche, **dadurch gekennzeichnet, dass** das Trägermaterial (4) einen Erweichungs- oder Zersetzungspunkt im Bereich von 80 °C bis 500 °C aufweist.

5. Brandschutzelement (10) nach einem der vorhergehenden Ansprüche, **dadurch gekennzeichnet, dass** das Trägermaterial (4) eine Polymerdispersion auf Wasser- oder Lösungsmittelbasis umfasst.

6. Brandschutzelement (10) nach einem der vorhergehenden Ansprüche, **dadurch gekennzeichnet, dass** das physikalisch wirkende Treibmittel (5) aus der Gruppe bestehend aus Graphit-Interkallationsverbindungen, Schichtsilikat-Interkallationsverbindungen, Perliten und Mischungen davon ausgewählt ist.

7. Brandschutzelement (10) nach einem der vorhergehenden Ansprüche, **dadurch gekennzeichnet, dass** das semi-rigide Material ausgewählt ist aus der Gruppe bestehend aus Faserverbundmaterial, Metall, Metalllegierungen und Kombinationen daraus.

8. Brandschutzelement (10) nach einem der vorhergehenden Ansprüche, **dadurch gekennzeichnet, dass** das semi-rigide Material als Folie, als perforierte Platte, als Matte, als Gitter oder als Gewebe ausgebildet ist.

9. Brandschutzelement (10) nach Anspruch 7 oder 8, **dadurch gekennzeichnet, dass** das semi-rigide Material ausgewählt ist aus der Gruppe bestehend aus Streckmetall, Glasfasergewebe, Aluminiumfolie und Kombinationen daraus.

10. Brandschutzelement (10) nach einem der vorhergehenden Ansprüche, **dadurch gekennzeichnet, dass** eine oder mehrere der Brandschutzschichten (2) und/oder die Funktionsschicht (3) zusätzlich eine oder mehrere Zwischenschichten (6) umfassen.

11. Brandschutzelement (10) nach einem der vorhergehenden Ansprüche, **dadurch gekennzeichnet, dass** die Brandschutzschicht (2) eine maximale mittlere Schichtdicke von ≤ 10 mm aufweist.

12. Brandschutzelement (10) nach einem der vorhergehenden Ansprüche, **dadurch gekennzeichnet, dass** das Verhältnis der mittleren Schichtdicke einer Brandschutzschicht (2) zur mittleren Schichtdicke einer Funktionsschicht (3) im Schichtkörper (11) in einem Verhältnis von 1:3 bis 10:1 liegt.

13. Brandschutzelement (10) nach einem der vorhergehenden Ansprüche, **dadurch gekennzeichnet, dass** der Schichtkörper (11) streifenförmig ausgestaltet ist.

14. Verfahren zur Herstellung eines Brandschutzelements (10) nach einem der Ansprüche 1 bis 13 umfassend die Schritte
i) Bereitstellen einer ersten Brandschutzschicht (21),
ii) Bereitstellen einer Funktionsschicht (3),
iii) Verbinden der Brandschutzschicht (21) mit der Funktionsschicht (3) zur Herstellung eines zweischichtigen Schichtkörpers,
iv) Bereitstellen einer zweiten Brandschutzschicht (22),
v) Verbinden der zweiten Brandschutzschicht (22) mit dem in Schritt iii) hergestellten zweischichtigen Schichtkörper sowie
vi) Herstellen einer im Wesentlichen stoffschlüssigen Verbindung zwischen den Brandschutzschichten (21) und (22) und der zwischen den Brandschutzschichten (21) und (22) angeordneten Funktionsschicht (3).

15. Verwendung eines Brandschutzelements (10) nach einem der Ansprüche 1 bis 13 oder hergestellt nach dem Verfahren gemäß Anspruch 14 zur Abdichtung von Durchgangsöffnungen und/oder Fugen in Bauelementen gegen Feuer und Rauchgase.
